# FASCICULE DE BREVET EUROPEEN

(11) **EP 0 915 792 B1**
(45) Date de publication et mention de la délivrance du brevet: **27.02.2002**
(21) Numéro de dépôt: 97924089.2
(22) Date de dépôt: 14.05.1997
(51) Int. Cl.: B60T 13/573

(54) **SERVOMOTEUR DE FREINAGE A REACTION PNEUMATIQUE SELECTIVE**
BREMSKRAFTVERSTÄRKER MIT ANPASSBARER PNEUMATISCHER REAKTION
BRAKE SERVO WITH SELECTIVE PNEUMATIC FEEDBACK

(30) Priorité: 05.08.1996 FR 9609933
(43) Date de publication de la demande: 19.05.1999
(73) Titulaire: BOSCH SISTEMAS DE FRENADO, S.L., 08080 Barcelona 6 (ES)
(72) Inventeur: SIMON BACARDIT, Juan, Bosch Systèmes de Freinage, F-93700 Drancy (FR)
(74) Mandataire: Bentz, Jean-Paul
(86) Numéro de dépôt international: FR9700851
(87) Numéro de publication internationale: WO9805541

(56) Documents cités:
- EP-A- 0 151 028
- WO-A-96/30245
- DE-A- 2 038 385

## Description

La présente invention concerne un servomoteur pneumatique d'assistance, notamment utilisable pour. l'assistance au freinage sur les véhicules à moteur, comprenant : une enveloppe rigide séparée de façon étanche en au moins deux chambres de travail, dont la première est reliée à une première source de pression délivrant une première pression, et dont la seconde est susceptible d'être sélectivement reliée, au moyen d'un clapet à trois voies, à la première source ou à une seconde source de pression délivrant une pression supérieure à la première; une cloison mobile délimitant les deux chambres de travail à l'intérieur de l'enveloppe et comportant une jupe rigide, cette cloison mobile étant susceptible d'être sollicitée par une force d'assistance résultant d'une différence de pression sélectivement établie entre les deux chambres de travail par l'actionnement du clapet à trois voies; un piston pneumatique susceptible d'entraîner la jupe suivant une première direction axiale et renfermant le clapet à trois voies; une tige de commande également logée dans le piston et susceptible de recevoir une force d'entrée contrôlant l'actionnement du clapet à trois voies; une tige de poussée axialement mobile par rapport à la tige de commande, et susceptible de recevoir, pour la retransmettre, une force de sortie qui est orientée suivant la première direction axiale et qui se compose de la force d'entrée et de la force d'assistance; et des moyens de réaction interposés entre les tiges de commande et de poussée pour appliquer sur la tige de commande, à l'encontre de la force d'entrée, une réaction susceptible de croître avec la force d'assistance.

Des dispositifs de ce type, bien connus dans l'art antérieur, sont aujourd'hui appliqués sur un très grand nombre de véhicules à moteur pour assurer une assistance au freinage.

Ces dispositifs utilisent généralement, en tant que moyen de réaction essentiel, un disque de réaction formé d'un matériau élastomère, qui donne et donnera encore certainement longtemps toute satisfaction.

Cependant, et malgré le caractère traditionnel des techniques concernées, les servomoteurs continuent de faire l'objet de recherches importantes, visant à en optimiser la caractéristiques de fonctionnement.

Au nombre de ces recherches figurent notamment des tentatives actuelles pour améliorer la définition des performances dynamiques des servomoteurs, et plus précisément pour réduire les tolérances sur celles de leurs caractéristiques de fonctionnement qui sont susceptibles de varier en fonction de la vitesse avec laquelle ils sont actionnés.

La présente invention se situe dans ce contexte, et a pour but de proposer un servomoteur qui, pour une production en série, présente une plus grande reproductibilité de fonctionnement que les servomoteurs actuels, ainsi qu'un temps de réponse sélectivement plus court.

A cette fin, le servomoteur de l'invention est essentiellement caractérisé en ce que les moyens de réaction comprennent : un volume fixe défini, dans une zone centrale de la jupe, entre des première et seconde parois rigides dont cette jupe est dotée et qui sont repectivement tournées vers les première et seconde chambres de travail; une séparation mobile divisant le volume fixe en des première et seconde chambres de réaction respectivement délimitées en partie par les seconde et première parois rigides et respectivement adjacentes aux secondes et premières chambres de travail, des première et seconde communications reliant respectivement les premières chambres de travail et de réaction entre elles, et les secondes chambres de travail et de réaction entre elles; et un clapet sélectif propre à obturer au moins partiellement la seconde communication en réponse à un débit d'air supérieur à une valeur prédéterminée s'établissant depuis la seconde chambre de travail vers la seconde chambre de réaction, la première paroi rigide de la jupe étant conformée pour pouvoir entraîner, au moins indirectement, la tige de poussée suivant la première direction axiale, et la séparation étant conformée pour pouvoir entraîner, au moins indirectement, la tige de commande suivant une direction inverse de la première direction axiale.

Bien que l'auteur de la présente invention soit déjà l'auteur d'un dispositif voisin non encore connu publiquement, mais ayant déjà fait l'objet, le 31 Mars 1995, du dépôt de demande de brevet français FR-A-2732414, le servomoteur proposé ici se distingue du dispositif antérieur par le fait qu'il comprend un clapet sélectif contrôlant le débit d'air qui circule de la seconde chambre de travail vers la seconde chambre de réaction.

Grâce à ce clapet sélectif, le servomoteur proposé oppose à l'effort de freinage appliqué par le conducteur une réaction d'autant plus faible que l'effort de freinage est rapide, ce qui permet d'adapter la réponse du servomoteur à la sollicitation de ce dernier, pour une plus grande efficacité de freinage et un plus grand confort du conducteur.

De plus, dans la mesure où la viscosité de l'air varie relativement peu en fonction de la température, les caractéristiques adaptées du servomoteur présentent une excellente stabilité.

Le clapet sélectif peut par exemple comprendre un organe d'obturation engagé de façon mobile dans la seconde communication, repoussé par un ressort de clapet vers une position d'ouverture maximale, et poussé vers une position d'ouverture minimale par un débit d'air circulant de la seconde chambre de travail vers la seconde chambre de réaction.

Selon un autre mode de réalisation possible, le clapet sélectif comprend une lamelle élastique se tenant spontanément à distance de la seconde communication et susceptible de venir se plaquer sur la seconde communication sous l'effet d'un débit d'air circulant de la seconde chambre de travail vers la seconde chambre de réaction.

D'autres caractéristiques et avantages de l'invention ressortiront clairement de la description qui en est faite ci-après, à titre indicatif et nullement limitatif, en référence aux dessins, dans lesquels :
- la figure 1 est une vue en coupe d'un servomoteur incorporant les caractéristiques de l'invention, à l'exception du clapet sélectif qui constitue l'apport spécifique de la présente proposition;
- la figure 2 est une vue en coupe agrandie de la partie encerclée de la figure 1 pour un servomoteur comprenant toutes les caractéristiques de l'invention, cette figure représentant un premier mode de réalisation possible d'un clapet sélectif;
- la figure 3 est une vue en coupe du clapet sélectif, réalisée suivant la ligne 3-3 de la figure 2;
- la figure 4 est une vue en coupe agrandie de la partie encerclée de la figure 1 pour un servomoteur comprenant toutes les caractéristiques de l'invention, cette figure représentant un second mode de réalisation possible d'un clapet selectif; et
- la figure 5 est une vue en plan du clapet sélectif observé suivant l'incidence 5-5 de la figure 4.

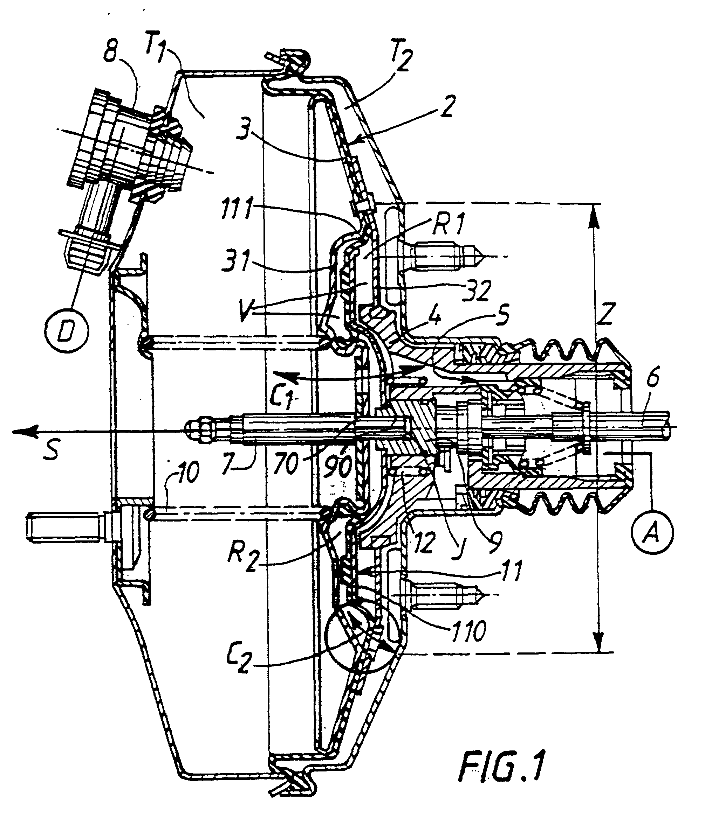

De façon connue en soi, ce servomoteur pneumatique d'assistance comprend (figure 1) une enveloppe rigide 1, une cloison mobile 2 comportant une jupe rigide 3, un piston pneumatique 4, un clapet à trois voies 5, une tige de commande 6, une tige de poussée 7, et des moyens de réaction interposés entre les tiges de commande 6 et de poussée 7, et dont le perfectionnement fait plus spécifiquement l'objet de l'invention.

La cloison mobile 2 sépare de façon étanche le volume intérieur de t'enveloppe rigide 1 en deux chambres de travail T1 et T2, de volume complémentaire et variable.

La première chambre de travail T1 est reliée à une source de basse pression D par l'intermédiaire d'une valve anti-retour 8, et la seconde chambre de travail T2 est susceptible d'être sélectivement reliée, au moyen du clapet à trois voies 5, soit à la source de basse pression D, soit à une source de pression relativement haute A, par exemple l'atmosphère.

Grâce à cet agencement connu en soi, l'actionnement du clapet à trois voies 5, qui relie la seconde chambre de travail T2 à la seconde source A, provoque une différence de pression entre les deux chambres de travail T 1 et T2, la cloison mobile 2 se trouvant ainsi sollicitée par une force qui représente la force d'assistance du servomoteur, et se déplaçant à l'intérieur de l'enveloppe 1 à l'encontre de la force exercée par un ressort 10, en entraînant avec elle le piston pneumatique 4, solidaire de la jupe 3.

En pratique, le clapet à trois voies 5 est porté par le piston 4 et son ouverture sur la chambre de travail T2 est commandée par l'application d'une force d'entrée suivant la direction axiale S sur la tige de commande 6, cette tige étant elle-même portée par le piston 4 et se terminant par un palpeur 9.

La tige de poussée 7 est montée axialement mobile par rapport à la tige de commande 6, et est susceptible de recevoir une force de sortie également orientée suivant la direction axiale S, cette force de sortie étant retransmise à un maître-cylindre (non représenté) et se composant de la force d'entrée et de la force d'assistance.

Comme annoncé précédemment, l'invention concerne plus spécifiquement un perfectionnement des moyens dits «de réaction» qui sont interposés entre la tige de commande 6 et la tige de poussée 7, pour appliquer sur la tige de commande, à l'encontre de la force d'entrée, une réaction susceptible de croître avec la force d'assistance.

Dans un servomoteur conforme à l'invention, ces moyens de réaction comprennent : un volume fixe V défini, dans une zone centrale Z de la jupe 3, entre deux parois rigides 31, 32 de cette jupe 3; une séparation mobile 11 divisant le volume fixe V en deux chambres de réaction R1 et R2; une première communication C1 reliant entre elles les chambres de travail et de réaction T1 et R1, et une seconde communication C2 reliant entre elles les chambres de travail et de réaction T2 et R2.

Comme le montre la figure 1, les parois rigides 31, 32 de la jupe 3, respectivement tournées vers les chambres de travail T1 et T2 délimitent en partie, respectivement, les chambres de réaction R2 et R1, par ailleurs séparées l'une de l'autre par la séparation mobile 11.

Par exemple, la séparation mobile 11 est constituée de la même manière que la cloison mobile 2 et comprend une jupe auxiliaire rigide 110 et une membrane souple 111, qui peut, comme représenté sur la figure, être commune à cette séparation et à la cloison mobile 2.

Ainsi, dans le cas particulier du servomoteur illustré, la communication C1 traverse la paroi rigide 31 de la jupe 3 et la jupe auxiliaire rigide 110, alors que la communication C2 traverse la paroi rigide 32 de la jupe 3 et la membrane souple 111.

La transmission de la force d'assistance est assurée par le fait que la paroi rigide 31 de la jupe 3 est conformée pour pouvoir venir en butée, suivant la direction axiale S, contre un épaulement 70 de la tige de poussée 7, et peut ainsi entraîner cette tige de poussée 7 suivant cette direction axiale S.

D'autre part, l'application de la réaction sur la tige de commande 6 est assurée par le fait que la séparation 11, et plus précisément la jupe auxiliaire rigide 110, est conformée pour pouvoir venir en butée, suivant une direction inverse de la direction axiale S, contre un épaulement 90 du palpeur 9, et peut ainsi entraîner la tige de commande 6, solidaire du palpeur 9, suivant une direction inverse de la direction axiale S.

De préférence, le servomoteur comprend en outre un ressort précontraint 12 interposé entre la séparation 11 et le piston pneumatique 4 pour définir la valeur minimale (appelée "saut") de la force d'assistance susceptible d'être produite par le servomoteur.

Le fonctionnement du servomoteur tel que décrit jusqu'à présent, et ne comprenant donc pas encore toutes les caractéristiques de l'invention, est le suivant.

Dans la position de repos du servomoteur, le ressort 12, qui repousse la jupe auxiliaire 110 à distance du piston 4, donc de l'épaulement 90 du palpeur 9, laisse apparaître, entre cette jupe auxiliaire et cet épaulement, un jeu qui tend à se réduire dès qu'une force d'entrée est appliquée sur la tige de commande 6.

D'autre part, les chambres de travail T1 et T2, qui restent en communication l'une avec l'autre à travers le clapet 5 aussi longtemps que le servomoteur est en position de repos, se trouvent isolées l'une de l'autre dès le début de l'application de la force d'entrée, après quoi le clapet 5 relie la chambre de travail arrière T2 à l'atmosphère A, de façon connue en soi.

Cependant, l'air atmosphérique également admis progressivement dans la chambre de réaction R2 à travers la communication C2 repousse la séparation 11 dans une direction inverse de la direction axiale S, jusqu'à ce que le jeu entre la jupe auxiliaire 110 et l'épaulement 90 du palpeur 9 soit comblé, le servomoteur adoptant alors la position représentée sur la figure 1.

Au delà de cette position, la cloison mobile 2, sollicitée par la différence de pression créée entre les chambres de travail T1 et T2, se déplace dans la direction S en comprimant le ressort 10 et en appliquant à la tige de poussée 7 une force proportionnelle à la force d'entrée appliquée sur la tige de commande 6, la proportionnalité étant assurée par la réaction transmise par la séparation 11 à la tige de poussée 6 par l'intermédiaire du palpeur 9.

Ce mode de fonctionnement se poursuit jusqu'à ce que la pression dans les chambres T2 et R2 avoisine la pression atmosphérique, et que le jeu J existant jusque là entre le palpeur 9 et la tige de poussée 7 soit comblé (régime de saturation), tout accroissement ultérieur de la force d'entrée étant ensuite directement transmis à la tige de poussée 7 par l'appui direct du palpeur 9 sur cette tige 7.

Cependant, comme indiqué précédemment, un servomoteur conforme à l'invention comprend, en plus des éléments déjà décrits, un clapet sélectif 13 propre à obturer au moins partiellement la seconde communication C2 en réponse à un débit d'air supérieur à une valeur prédéterminée s'établissant depuis la seconde chambre de travail T2 vers la seconde chambre de réaction R2, la présence d'un tel clapet sélectif ayant pour effet qu'un servomoteur conforme à l'invention n'adopte le fonctionnement précédemment décrit que s'il est sollicité par un effort de freinage évoluant de façon relativement lente.

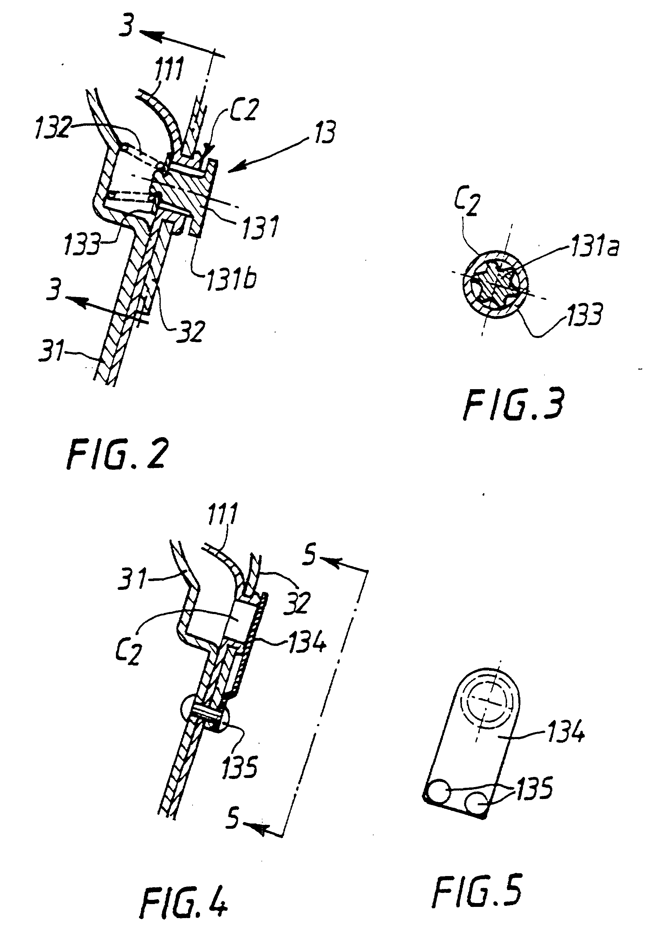

Selon un premier mode de réalisation possible (figures 2 et 3), le clapet sélectif 13 comprend un organe d'obturation 131 engagé de façon mobile dans la seconde communication C2, repoussé par un ressort de clapet 132 vers une position d'ouverture maximale, et poussé vers une position d'ouverture minimale par un débit d'air circulant de la seconde chambre de travail T2 vers la seconde chambre de réaction R2.

Comme le montrent les figures 2 et 3, l'organe d'obturation 131 se compose essentiellement d'un corps cannelé 131a, inscrit dans un cylindre, et d'un rebord 131b susceptible de venir obturer la communication C2 lorsque la pression dynamique de l'air traversant cette dernière applique à l'organe d'obturation 131 une force suffisante pour vaincre la force du ressort 132.

Par ailleurs, une rondelle 133 assujettie à l'organe d'obturation 131 à son extrémité la plus éloignée du rebord 131b est susceptible de venir prendre appui sur le bord de la communication C2 pour définir la position extrême que cet organe d'obturation est autorisé à adopter sous l'effet de la force du ressort 132.

Selon un second mode de réalisation possible (figures 4 et 5), le clapet sélectif 13 comprend une lamelle élastique 134 fixée par des rivets tels que 135 à la paroi rigide 32, se tenant spontanément à distance de la seconde communication C2, et susceptible de venir se plaquer sur cette seconde communication sous l'effet d'un débit d'air supérieur à une valeur déterminée, circulant de la seconde chambre de travail T2 vers la seconde chambre de réaction R2.

## Revendications

1. Servomoteur pneumatique d'assistance comprenant : une enveloppe rigide (1) séparée de façon étanche en au moins deux chambres de travail (T1, T2), dont la première (T1) est reliée à une première source de pression (D) délivrant une première pression, et dont la seconde (T2) est susceptible d'être sélectivement reliée, au moyen d'un clapet à trois voies (5), à la première source (D) ou à une seconde source de pression (A) délivrant une pression supérieure à la première; une cloison mobile (2) délimitant les deux chambres de travail à l'intérieur de l'enveloppe et comportant une jupe rigide (3), cette cloison mobile étant susceptible d'être sollicitée par une force d'assistance résultant d'une différence de pression sélectivement établie entre les deux chambres de travail par l'actionnement du clapet à trois voies; un piston pneumatique (4) susceptible d'entraîner la jupe (3) suivant une première direction axiale (S) et renfermant le clapet à trois voies (5); une tige de commande (6) également logée dans le piston et susceptible de recevoir une force d'entrée contrôlant l'actionnement du clapet à trois voies; une tige de poussée (7) axialement mobile par rapport à la tige de commande, et susceptible de recevoir, pour la retransmettre, une force de sortie qui est orientée suivant la première direction axiale (S) et qui se compose de la force d'entrée et de la force d'assistance; et des moyens de réaction interposés entre les tiges de commande (6) et de poussée (7) pour appliquer sur la tige de commande, à l'encontre de la force d'entrée, une réaction susceptible de croître avec la force d'assistance, **caractérisé en ce que** les moyens de réaction comprennent : un volume fixe (V) défini, dans une zone centrale (Z) de la jupe, entre des première et seconde parois rigides (31, 32) dont cette jupe est dotée et qui sont repectivement tournées vers les première et seconde chambres de travail (T1, T2); une séparation mobile (11) divisant le volume fixe (V) en des première et seconde chambres de réaction (R1, R2) respectivement délimitées en partie par les seconde et première parois rigides (32, 31) et respectivement adjacentes aux seconde et première chambres de travail (T2, T1); des première et seconde communications (C1, C2) reliant respectivement les premières chambres de travail (T1) et de réaction (R1) entre elles, et les secondes chambres de travail (T2) et de réaction (R2) entre elles; et un clapet sélectif (13) propre à obturer au moins partiellement la seconde communication (C2) en réponse à un débit d'air supérieur à une valeur prédéterminée s'établissant depuis la seconde chambre de travail (T2) vers la seconde chambre de réaction (R2), la première paroi rigide (31) de la jupe (3) étant conformée pour pouvoir entraîner, au moins indirectement, la tige de poussée (7) suivant la première direction axiale (S), et la séparation (11) étant conformée pour pouvoir entraîner, au moins indirectement, la tige de commande (6) suivant une direction inverse de la première direction axiale.

2. Servomoteur suivant la revendication 1, **caractérisé en ce que** le clapet sélectif (13) comprend un organe d'obturation (131) engagé de façon mobile dans la seconde communication (C2), repoussé par un ressort de clapet (132) vers une position d'ouverture maximale, et poussé vers une position d'ouverture minimale par un débit d'air circulant de la seconde chambre de travail (T2) vers la seconde chambre de réaction (R2).

3. Servomoteur suivant la revendication 1, **caractérisé en ce que** le clapet sélectif (13) comprend une lamelle élastique (134) se tenant spontanément à distance de la seconde communication (C2) et susceptible de venir se plaquer sur la seconde communication sous l'effet d'un débit d'air circulant de la seconde chambre de travail (T2) vers la seconde chambre de réaction (R2).

## Patentansprüche

1. Pneumatischer Bremskraftverstärker, umfassend: ein starres Gehäuse (1), das auf dichte Weise in wenigstens zwei Arbeitskammern (T1, T2) geteilt ist, von denen die erste (T1) mit einer ersten Druckquelle (D) verbunden ist, die einen ersten Druck erzeugt,und die zweite (T2) mit Hilfe eines Dreiwegeventils (5) wahlweise mit der ersten Druckquelle (D) oder einer zweiten Druckquelle (A) verbunden werden kann, die einen Druck erzeugt, der größer ist als der erste; eine bewegliche Trennwand (2), die die beiden Arbeitskammern im Inneren des Gehäuses begrenzt und eine starre Schürze (3) aufweist, wobei diese bewegliche Trennwand von einer Hilfskraft beaufschlagt werden kann, die sich aus einer Druckdifferenz ergibt, die sich wahlweise zwischen den beiden Arbeitskammern durch die Betätigung des Dreiwegeventils aufgebaut hat; einen pneumatischer Kolben (4), der die Schürze (3) entlang einer ersten, axialen Richtung (S) mitnehmen kann und das Dreiwegeventil (5) umschließt; eine Steuerstange (6), die ebenfalls in dem Kolben angeordnet ist und eine Eingangskraft aufnehmen kann, die die Betätigung des Dreiwegeventils steuert; eine Steuerstange (7), die bezüglich der Steuerstange axial beweglich ist und um sie weiterzugeben, eine Ausgangskraft aufnehmen kann, die entlang der ersten, axiaien Richtung (S) wirkt und die sich aus der Eingangskraft und der Hilfskraft zusammensetzt, und Reaktionsmittel, die zwischen den Steuerkolben (6) und den Druckkolben (7) geschaltet sind, um gegen die Eingangskraft auf den Steuerkolben eine Reaktion zu übertragen, die mit der Hilfskraft zunehmen kann, **dadurch gekennzeichnet, daß** die Reaktionsmittel umfassen: ein festes Volumen (V), das in einem zentralen Bereich (Z) der Schürze zwischen einer ersten und einer zweiten starren Wand (31, 32) definiert ist, mit denen diese Schürze versehen ist und die der ersten bzw. der zweiten Arbeitskammer (T1, T2) zugewandt sind; eine bewegliche Abtrennung (11), die das feste Volumen (V) in eine erste und eine zweite Reaktionskammer (R1, R2) teilt, die teilweise durch die zweite bzw. die erste starre Wand (32, 31) begrenzt und an die zweite bzw. erste Arbeitskammer (T2, T1) angrenzen; eine erste und eine zweite Verbindung (C1, C2), die die erste Arbeitskammer (T1) mit der ersten Reaktionskammer (R1) bzw. die zweite Arbeitskammer (T2) mit der zweiten Reaktionskammer (R2) verbinden; und ein Auswahlventil (13), das dazu geeignet ist, die zweite Verbindung (C2) wenigstens teilweise als Reaktion auf einen Luftdurchsatz zu verschließen, der größer ist als ein vorbestimmter Wert und sich von der zweiten Arbeitskammer (T2) in Richtung der zweiten Reaktionskammer (R2) aufbaut, wobei die erste starre Wand (31) der Schürze (3) so ausgebildet ist, daß sie wenigstens indirekt die Schubstange (7) entlang der ersten, axialen Richtung (S) mitnehmen kann und die Abtrennung (11) so ausgebildet ist, daß sie wenigstens indirekt die Schubstange (6) in eine zu der ersten, axialen Richtung entgegengesetzte Richtung mitnehmen kann.

2. Bremskraftverstärker nach Anspruch 1, **dadurch gekennzeichnet, daß** das Auswahlventil (13) ein Verschlußmittel (131) aufweist, das beweglich in die zweite Verbindung (C2) eingreift, durch eine Ventilfeder (132) in eine Stellung maximaler Öffnung zurückgedrängt wird und durch einen Luftstrom, der von der zweiten Arbeitskammer (T2) in die zweite Reaktionskammer (R2) strömt, in eine Stellung minimaler Öffnung gedrückt wird.

3. Bremskraftverstärker nach Anspruch 1, **dadurch gekennzeichnet, daß** das Auswahlventil (13) eine elastische Lamelle (134) umfaßt, die sich automatisch in einem Abstand zu der zweiten Verbindung (C2) hält und unter der Wirkung eines Luftstroms, der von der zweiten Arbeitskammer (T2) zu der zweiten Reaktionskammer (R2) strömt, auf die zweite Verbindung legt.

## Claims

1. Pneumatic booster comprising: a rigid casing (1) divided in leaktight fashion into at least two working chambers (T1, T2), the first (T1) of which is connected to a first pressure source (D) delivering a first pressure, and the second (T2) of which can be connected selectively, by means of a three-way valve (5), to the first source (D) or to a second pressure source (A) delivering a pressure higher than the first; a moving partition (2) delimiting the two working chambers inside the casing and including a rigid skirt (3), it being possible for this moving partition to be urged by a boost force resulting from a difference in pressure set up selectively between the two working chambers by actuation of the three-way valve; a pneumatic piston (4) capable of carrying the skirt (3) along in a first axial direction (S) and containing the three-way valve (5); an operating rod (6) also accommodated in the piston and able to receive an input force controlling the actuation of the three-way valve; a push rod (7) able to move axially with respect to the operating rod and able to receive, in order to transmit it on, an output force which is orientated in the first axial direction (S) and is composed of the input force and of the boost force; and reaction means interposed between the operating rod (6) and the push rod (7) in order to apply to the operating rod, counter to the input force, a reaction which can increase with the boost force, **characterized in that** the reaction means comprise: a fixed volume (V) defined, in a central region (Z) of the skirt, between first and second rigid walls (31, 32) with which this skirt is equipped and which point respectively towards the first and second working chambers (T1, T2); a moving divider (11) dividing the fixed volume (V) into first and second reaction chambers (R1, R2) respectively delimited in part by the second and first rigid walls (32, 31) and respectively adjacent to the second and first working chambers (T2, T1) ; first and second communications (C1, C2) respectively connecting the first working chamber (T1) and first reaction chamber (R1) together, and connecting the second working chamber (T2) and second reaction chamber (R2) together; and a selective valve (13) capable of closing the second communication (C2) off at least partially in response to an air flow higher than a predetermined value established from the second working chamber (T2) towards the second reaction chamber (R2), the first rigid wall (31) of the skirt (3) being shaped so that it can, at least indirectly, carry the push rod (7) along in the first axial direction (S), and the divider (11) being shaped so that it can, at least indirectly, carry the operating rod (6) along in a direction which is the opposite direction to the first axial direction.

2. Booster, according to Claim 1, **characterized in that** the selective valve (13) comprises a shutter member (131) engaged in such a way that it can move in the second communication (C2), pushed back by a valve spring (132) towards a wide open position, and pushed towards a minimally open position by a flow of air travelling from the second working chamber (T2) towards the second reaction chamber (R2).

3. Booster according to Claim 1, **characterized in that** the selective valve (13) comprises an elastic leaf (134) which spontaneously keeps away from the second communication (C2) and can become pressed against the second communication under the effect of a flow of air travelling from the second working chamber (T2) towards the second reaction chamber (R2).
